# EUROPÄISCHE PATENTSCHRIFT

(11) **EP 0 900 298 B1**
(45) Veröffentlichungstag und Bekanntmachung des Hinweises auf die Patenterteilung: **02.01.2003**
(21) Anmeldenummer: 97923928.2
(22) Anmeldetag: 16.05.1997
(51) Int. Cl.: D06N 1/00, E04F 15/10

(54) **FLEXIBLE BODENBELAGS-FLIESE**
FLEXIBLE FLOORING TILE
CARREAU FLEXIBLE DE REVETEMENT DE SOL

(30) Priorität: 20.05.1996 DE 19620227
(43) Veröffentlichungstag der Anmeldung: 10.03.1999
(73) Patentinhaber: Armstrong DLW AG, 74321 Bietigheim-Bissingen (DE)
(72) Erfinder: VIELUF, Hans-Dieter, D-27753 Delmenhorst (DE)
(74) Vertreter: Müller-Boré & Partner Patentanwälte
(86) Internationale Anmeldenummer: EP9702533
(87) Internationale Veröffentlichungsnummer: WO97044518

(56) Entgegenhaltungen:
- WO-A-97/19219
- DE-A- 1 609 563
- DE-A- 2 052 581
- DE-A- 3 515 756
- DE-C- 395 706
- DE-U- 8 633 348
- GB-A- 441 939
- US-A- 1 348 571

## Beschreibung

Die vorliegende Erfindung betrifft eine flexible Bodenbelags-Fliese. Genauer betrifft die vorliegende Erfindung eine Bodenbelags-Fliese mit einem Träger und darauf angeordneten Linoleum- Schichten bzw. Linoleum- Nutzschichten, wobei zwischen dem Träger und den Nutzschichten mindestens eine Wärmeisolationsschicht und/oder eine Schicht zur Trittschalldämmung eingebracht ist.

Flexible Bodenbelags-Fliesen sind bekannt. Sie können eine Nutzschicht auf Basis eines Kunststoffs aufweisen und die Nutzschicht kann auf einem Träger aufgebracht sein, z.B. einem Träger aus einem natürlichen oder synthetischen Gewebe. Glasfasergewebe sind ebenfalls als Träger geeignet. Beispielsweise sind textile Fliesen aus Nadelfilz aus z.B. Polypropylen, Polyamid, Polyester, Polyacrylnitril und deren Mischungen bekannt. Es sind weiterhin getuftete textile Fliesen aus Natur- und/oder Synthesefasern mit einem Träger aus Natur- und/oder Synthesefasern (welcher ein Gewebe und/oder Vlies sein kann), wobei die Rückseite der Fliese mit z.B. Latex, Polyvinylchlorid oder Bitumen beschichtet ist, bekannt. Ferner gibt es Fliesen mit einer Nutzschicht aus Naturkork auf einem Stabilisierungsträger aus Gewebe oder Vlies, gegebenenfalls in Kombination mit einem Haftkleber.

Flexible Bodenbelags-Fliesen werden gewöhnlich durch Ausstanzen der Fliese in der gewünschten Größe aus einem Bahnenmaterial des Bodenbelags hergestellt. Die Fliesen sind meist quadratisch mit einer Kantenlänge von etwa 30 bis etwa 60 cm, können jedoch auch andere Formen und/oder Größen aufweisen.

Bei Fliesen, die einen Träger aufweisen, besteht das Problem, daß der Träger einen anderen Ausdehnungskoeffizienten aufweist, als die Nutzschicht. Dies führt zu einer Art "Bimetall-Effekt", d.h. die Kanten der Fliese biegen sich bei Temperaturänderung, Feuchtigkeitsänderung oder anderer Umwelteinflüsse nach oben, (sogenanntes "Schüsseln" der Fliese) oder nach unten (sogenanntes "Krallen" der Fliese). In beiden Fällen führt die Verformung der Fliese dazu, daß sie sich, selbst wenn sie mit dem Untergrund verklebt ist, mindestens teilweise vom Untergrund abhebt. Das Ausmaß in dem die Fliese sich wölbt, hängt vom Material der Nutzschicht und des Trägers ab. Die Verformung der Fliese ist bei Linoleum als Nutzschicht besonders ausgeprägt, da Linoleum nach der Herstellung des Bodenbelags beim Abkühlen nach dem Reifeprozeß in der Reifekammer bzw. dem Reifehaus merklich schrumpft. Dieses Schrumpfen führt, da sich das Trägergewebe nicht oder zumindest nicht im selben Maße wie die Nutzschicht zusammenzieht zu dem sogenannten Schüsseln der Fliese. Dieser Effekt kann z.B. bei Linoleum-Bodenbelags-Fliesen durch Quellen oder Kontrahieren des üblicherweise im Linoleum enthaltenen organischen Füllstoffs auf Basis gemahlenen Holzes und/oder Korks aufgrund von Feuchtigkeitsschwankungen der Umgebung verstärkt oder abgeschwächt werden. In der Regel heben sich jedoch die Verformungskräfte nicht gegenseitig auf, so daß die Fliese sich verformt. Diese umgebungsbedingte Verformung ist einer der wesentlichen Gründe, warum sich Bodenbelags-Fliesen, die eine Nutzschicht auf einem Träger aufweisen und insbesondere Linoleum-Bodenbelags-Fliesen nicht auf dem Markt etablieren konnten.

Aus DE-C-395 706 ist ein Verfahren zur Herstellung von Linoleum aus Bindemitteln und Füllmasse bekannt, wobei die Füllmasse ganz oder teilweise aus Cupren besteht.

Aus WO 97/19219, die zum Stand der Technik gemäß Art. 54(3) EPÜ zählt, ist ein Linoleumfußbodenbelag bekannt, welcher einen Träger umfasst, wobei auf beiden Seiten des Trägers eine Schicht aus gehärteter Linoleummasse haftend angeordnet ist.

Aufgabe der vorliegenden Erfindung ist es daher, eine Bodenbelags-Fliese auf Linoleum-Basis bereitzustellen, bei der die Nutzschicht auf einem Träger bzw. ein Trägergewebe aufgebracht ist und die bei Temperatur- und/oder Klimaschwankungen sowie Änderung anderer Raumbedingungen ihre planare Form nicht oder zumindest wesentlich weniger, als herkömmliche Bodenbelags-Fliesen dieser Art, verändert.

Diese Aufgabe wird mit den in den Patentansprüchen gekennzeichneten Gegenständen gelöst. Die Lösung der Aufgabe beruht dabei auf der Erkenntnis, daß die umgebungsbedingte Verformung der Bodenbelags-Fliese auf Linoleum-Basis dadurch verhindert bzw. erheblich herabgesetzt werden kann, indem der verformenden Kraft der Linoleum-Nutzschicht auf der Oberseite des Trägers eine entsprechende Kraft auf der Unterseite des Trägers entgegengesetzt wird. Es wird somit erfindungsgemäß ein Aufbau der Bodenbelags-Fliese vorgeschlagen, bei dem ein Träger nicht nur, wie bei herkömmlichen Fliesen, auf einer Seite eine Nutzschicht aufweist, sondern bei dem auch die andere Seite des Trägers bzw. Trägergewebes beschichtet ist. Somit befindet sich der Träger bei der erfindungsgemäßen Bodenbelags-Fliese nicht auf einer Seite der Nutzschicht (sogenannter asymmetrischer Aufbau der Fliese) sondern ist zwischen zwei Schichten angeordnet, von denen beide Schichten Linoleum-Nutzschichten sind (sogenannter symmetrischer Aufbau der Fliese).

Die Erfindung sowie weitere sich daraus ergebende Vorteile werden in der nachfolgenden Beschreibung unter Bezugnahme auf die in den Beispielen und Vergleichsbeispielen konkretisierten Ausführungsformen näher erläutert.

Die erfindungsgemäße flexible Bodenbelags-Fliese weist einen Träger auf, der auf seinen beiden Seiten beschichtet ist. Beide Schichten sind Nutzschichten des Bodenbelags. Die zweite Nutzschicht dient im wesentlichen dazu, der Verformungskraft der ersten Nutzschicht entgegenzuwirken, wobei diese Schicht einerseits in ausreichendem Maße an dem Träger bzw. Trägergewebe und gegebenenfalls an dem in das Trägergewebe eingedrungene Material der gegenüberliegenden Nutzschicht haftet und andererseits mit dem Untergrund verklebbar sein soll. Beide Schichten der erfindungsgemäßen Bodenbelags-Fliese sind Linoleum-Nutzschichten, wobei die Komponenten, wie Bindemittel, Füllstoffe, Pigmente, Verarbeitungshilfsmittel u.ä. verschieden oder im wesentlichen gleich sein können und in gleicher oder verschiedener Menge vorliegen können.

Die Schichtdicken der beiden auf den Träger aufgebrachten Schichten können gleich oder verschieden sein. Bei Schichten, die eine unterschiedliche Zusammensetzung hinsichtlich ihrer Komponenten aufweisen, kann der Verformung der Fliese durch Variation der verwendeten Materialien, deren Menge und entsprechende Wahl der Schichtdicke der betreffenden Schicht entgegengewirkt werden. Beispielsweise kann eine unterschiedliche Ausdehnung der beiden Schichten aufgrund unterschiedlicher Ausdehnungskoeffizienten oder Reaktion auf Klimaveränderung durch unterschiedliche Schichtdicken ausgeglichen werden. Ebenso kann auch die Art und Menge von Füllstoffen, wie z.B. Holzmehl oder Korkmehl, die bei Änderung der relativen Luftfeuchtigkeit quellen oder schrumpfen, entsprechend verändert werden.

Vorzugsweise bestehen die beiden Schichten aus im wesentlichen jeweils der selben Art von Komponenten in möglichst den selben Mengen. In diesem Fall können beide auf den Träger aufgebrachten Schichten bzw. Nutzschichten in im wesentlichen der selben Schichtdicke gefertigt werden, wodurch sich die entgegengerichteten Verformungskräfte am besten ausgleichen lassen.

Die erfindungsgemäße Bodenbelags-Fliese weist eine Gesamtdicke von etwa 2 bis etwa 6 mm, vorzugsweise etwa 2 bis etwa 4 mm auf.

Als Träger kann jegliches bisher in Linoleum-Bodenbelägen bzw. Bodenbelags-Fliesen verwendete Material auf Basis natürlicher und/oder synthetischer Gewebe oder Gewirke sowie textiler Werkstoffe eingesetzt werden. Als Beispiele seien Jutegewebe, Mischgewebe aus natürlichen Fasern, wie Baumwolle und Zellwolle, Glasfasergewebe, mit Haftvermittler beschichtetes Glasfasergewebe, Mischgewebe aus Synthesefasern, Gewebe aus Kern/Mantelfasern mit z.B. einem Kern aus Polyester und einer Ummantelung aus Polyamid, genannt. Als Haftvermittler für Glasfasergewebe kann beispielsweise eine Beschichtung der Glasfasern aus einem Styrol-Butadien-Latex verwendet werden.

Bodenbeläge auf Basis von Linoleum enthalten einen sogenannten Bedford-Zement (kurz: B-Zement) aus einem teiloxidierten Leinöl und mindestens einem Harz als Klebrigmacher sowie mindestens einen Füllstoff, wie z.B. Weichholzmehl und/oder Korkmehl (bei gleichzeitiger Anwesenheit von Holzmehl und Korkmehl typischerweise im Gewichtsverhältnis 90:10) und/oder Kreide, Kaolin (China-Clay) und Schwerspat, und mindestens ein Pigment, wie Titandioxid und andere übliche Färbemittel auf Basis von anorganischen und organischen Farbstoffen. Eine typische Linoleum-Zusammensetzung besteht, bezogen auf das Gewicht der Nutzschicht, aus ca. 40 Gew.-% Bindemittel, ca. 30 Gew.-% organische Füllstoffe, ca. 20 Gew.-% anorganische (mineralische) Füllstoffe und ca. 10 Gew.-% Färbemittel.

Die vorliegende Erfindung wird anhand der Herstellung und Eigenschaften einer Linoleum-Bodenbelags-Fliese eingehender erläutert.

Wie vorstehend erwähnt, wird eine Bodenbelags-Fliese üblicherweise durch Ausstanzen aus einer vorgefertigten Bahn des Bodenbelags hergestellt. Die Herstellung von herkömmlichen Linoleum-Bodenbelägen in Bahnen geschieht in der Weise, daß zunächst alle Komponenten, wie Bindemittel (B-Zement, Füllstoffe, Pigmente und übliche Additive, wie Verarbeitungshilfsmittel, Antioxidantien, UV-Stabilisatoren, Gleitmittel und dergleichen) in einem geeigneten Mischapparat, z.B. einem Kneter, Walzwerk oder Extruder, zu einer möglichst homogenen Grundmasse (Mischmasse) vermischt werden. Zur Herstellung eines einfarbigen Linoleumbelags wird die Mischmasse einem Walzwerk (Kalander) zugeführt und unter Druck und einer Temperatur von üblicherweise 10 bis 150°C (abhängig von der Rezeptur und der Verfahrenstechnik) auf ein wie vorstehend beschriebenes Trägermaterial, zumeist ein Jutegewebe oder ein mit Haftvermittler beschichtetes Glasfasergewebe, gepreßt. Der Walzenabstand des Kalanders wird dabei so eingestellt, daß die resultierende Bodenbelagsbahn die gewünschte Schichtdicke erhält.

Das Verfahren kann dadurch abgeändert werden, daß im ersten Walzschritt eine unifarbene Mischmasse nur in einer solchen Menge auf das Trägergewebe aufgepreßt wird, daß die im Gewebe vorhandenen Zwischenräume ausgefüllt sind und sich eine geschlossene ebene Oberfläche ergibt. Anschließend wird das so beschichtete Trägergewebe und ein Linoleumfell (d.h. eine kalandrierte Bahn aus Linoleum-Grundmasse ohne Trägergewebe, das durch ein anderes Walzenpaar des Kalanders hergestellt wurde) auf geeignete Weise zu dem endgültigen Bodenbelag verpreßt. Zur Verbesserung der Wärmeisolationseigenschaften und der Trittschalldämmung kann zwischen dem (unbeschichteten oder beschichteten) Träger und dem Linoleumfell eine sogenannte Korkmentschicht eingebracht werden. Korkment ist eine Mischung, die B-Zement und gemahlenen Kork als Füllstoff enthält.

Wenn ein farbig gemusteter Bodenbelag hergestellt werden soll, werden Mischmassen bzw. Grundmassen verschiedener Farbe hergestellt und granuliert. Danach werden verschiedenfarbige Granulatteilchen dem Walzwerk zugeführt und entweder direkt auf das Trägergewebe oder auf das mit unifarbener Grundmasse und/oder einer Korkmentschicht vorbeschichtete Trägergewebe gepreßt, wodurch z.B. ein Bodenbelag mit einer dem Marmor nachempfundenen Musterung erhalten wird.

Im Gegensatz zu Bodenbelagsbahnen, bei denen Kunststoff als Bindemittel in der Nutzschicht verwendet wird, ist ein Bodenbelag auf Basis von Linoleum nach dem Kalandrieren der Mischmasse bzw. Grundmasse nicht gebrauchsfähig, da Linoleum in diesem Stadium keine für den weiteren Fertigungsprozeß und den Gebrauch ausreichende Zug- und Druckfestigkeit aufweist. Diese wird erst in einem nachfolgenden Reifeprozeß durch weiteres Vernetzen des Bindemittels erreicht. Dazu wird die Bahn vom Kalander in das sogenannte Reifehaus bzw. die Reifekammer transportiert und über Stangen hängend gelagert. Die Reifung der Linoleum-Bahn, d.h. die weitere Vernetzung bis zum gewünschten Vernetzungsgrad, erfolgt durch erwärmte Luft mit einer Temperatur von etwa 40-100°C während eines Zeitraumes, der von der Rezeptur, der Dicke der Nutzschicht, der Temperatur und der gewünschten Vernetzungsdichte abhängt und üblicherweise zwischen etwa 5 und etwa 50 Tagen liegt. Somit dient das Trägermaterial bei der Herstellung der Linoleum-Bodenbelagsbahn dazu, die Nutzschicht bis nach der Reife zu tragen und zu fixieren und danach als Armierung des Bodenbelags.

Da die im Bodenbelag enthaltenen organischen Füllstoffe, wie Holzmehl und/oder Korkmehl bei der Reifung des Bodenbelags Feuchtigkeit abgeben, wird der Bodenbelag nach der Reifung üblicherweise konditioniert, d.h. der Bodenbelag wird wieder auf eine übliche Hausfeuchtigkeit eingestellt.

Eine aus einer derartigen Linoleum-Bodenbelagsbahn gestanzte Fliese zeigt die unerwünschte Verformung (Schüsselung) aufgrund von Schrumpfung der Nutzschicht, die im wesentlichen auf die folgenden drei Gründe zurückzuführen ist:
1. Die Linoleum-Mischmasse (Grundmasse) besitzt aufgrund des B-Zements und der darin enthaltenen Füllstoffe, wie Korkmehl, gewisse elastische Eigenschaften. Beim Kalandrieren wird die Masse kurzzeitig unter Druck verpreßt und dabei wird das Material im Walzenspalt verstreckt. Nach Entfernen des Druckes geht das verstreckte Material teilweise wieder in seine Ausgangsform zurück, d.h. es zieht sich zusammen.
2. Das Schrumpfen wird verstärkt durch Materialverlust im Reifeprozeß durch Abdiffundieren flüchtiger Bestandteile der Mischmasse.
3. Schließlich bewirkt der größere Wärmeausdehnungskoeffizient der Nutzschicht im Vergleich mit dem Träger, daß die Nutzschicht sich beim Abkühlen nach dem Verlassen des Reifehauses bzw. der Reifekammer stärker zusammenzieht, als der Träger.

Bisherige Versuche, diese Verformung zu verhindern, sind erfolglos geblieben. So ist beispielsweise eine Reifung, bei der die Bodenbelagsbahnen liegend gelagert werden, technisch aufwendig und beeinflußt überdies die Verformung nicht merklich. Das Anbringen von Klammerleisten an den Kanten der hängend reifenden Bahnen, um die an den Kanten am meisten ausgeprägte Schüsselung zu verhindern, ist ebenfalls technisch aufwendig und damit teuer und ergibt lediglich eine graduelle Verbesserung der Formstabilität, ohne das Problem im wesentlichen zu lösen. Diese und ähnlich Versuche, wie die Verwendung verschiedener Trägermaterialien, waren nicht geeignet, die Fliesen in eine planare Form zu bringen und darin zu halten.

Daher werden erfindungsgemäße Linoleum-Bodenbelags-Fliesen wie folgt hergestellt:

Auf das in herkömmlicher Weise einseitig beschichtete Trägergewebe (entweder durch Aufwalzen von Mischmasse bzw. einem Linoleumfell auf das Trägergewebe bzw. auf ein bereits beschichtetes Trägergewebe, das ggf. eine zusätzliche Korkmentschicht aufweist) wird auf die andere Seite des Trägergewebes mindestens eine weitere Schicht aufkalandriert.

Als Träger kann jeder herkömmliche Träger verwendet werden, wie z.B. ein Jutegewebe. Erfindungsgemäß ist es jedoch bevorzugt, ein z.B. mit einem Styrol-Butadien-Latex als Haftvermittler beschichtetes Glasfasergewebe zu verwenden, da die rückseitig auf den Träger aufzubringende Schicht auf dem beschichteten Glasfasergewebe besser haftet, als auf Jute. Der Grund dafür ist, daß die rückseitige Schicht nicht mehr in die Hohlräume des Gewebes eindringen kann, da diese Hohlräume bereits von der zuerst aufgebrachten Schicht ausgefüllt sind und deswegen keine mechanische Verankerung der zweiten Schicht mit dem Träger die Haftung unterstützt.

Wie bereits erwähnt, kann die auf die Rückseite des Trägers aufgebrachte Schicht aus einem anderen Material als Linoleum bestehen. In jedem Fall ist darauf zu achten, daß die temperatur- und klimabedingten Ausdehnungen der beiden Schichten, die durch die Art der verwendeten Komponenten, deren Menge und die jeweilige Schichtdicke der Schicht bestimmt werden, möglichst gleich sind.

Erfindungsgemäß bestehen beide Schichten aus Linoleum und zwar vorzugsweise aus Linoleum von im wesentlichen gleicher Zusammensetzung.

Dies hat den Vorteil, daß sich die entgegengesetzt gerichteten Verformungskräfte bei annähernd gleicher Schichtdicke und annähernd identischer Zusammensetzung der beiden Schichten gegenseitig aufheben.

Ein weiterer Vorteil ist die Möglichkeit, die beiden Schichten bei sonst gleicher Zusammensetzung unterschiedlich farbig auszubilden, bzw. mit einem unterschiedlichen Muster zu versehen. Damit können beide Seiten der Fliese nach Wunsch miteinander kombiniert werden, ohne Gefahr zu laufen, im verlegten Boden Bereiche mit unterschiedlicher Dicke zu erhalten, die auf Schichtdickentoleranzen bei verschiedenfarbigen Fliesen aus unterschiedlichen Produktionschargen zurückzuführen sind.

Schließlich ist es aus umwelttechnischen Gründen vorteilhaft, daß die Fliese Nutzschichten aufweist, deren Bindemittel nur auf Basis natürlicher Rohstoffe hergestellt sind.

Die vorliegende Erfindung wird durch die nachfolgenden Beispiele und Vergleichsbeispiele näher erläutert. Die in den Beispielen und Vergleichsbeispielen hergestellten Bodenbelags-Fliesen werden zur Beurteilung der Formbeständigkeit für 48 Stunden in einem Normklima (23°C; 50% relative Feuchtigkeit) gelagert. Danach wird die Form visuell beurteilt.

### Beispiel 1

In einem Kneter werden folgende Komponenten für eine Linoleum-Mischmasse miteinander vermischt:
- 40: Gewichtsteile B-Zement;
- 30: ewichtsteile eines Gemisches aus Weichholzmehl und Korkmehl im Gewichtsverhältnis von 90:10;
- 20: Gewichtsteile Kreide; und
- 10: Gewichtsteile Titandioxid.

Diese unifarbene (weiße) Mischmasse wird mit einem Kalander auf die erste Seite eines Jutegewebes in einer Schichtdicke von 1 mm aufgepreßt. Der so beschichtete Träger wird auf der Rückseite mit einem aus der wie vorstehend beschriebenen Mischmasse hergestellten Linoleumfell mit einer Dicke von 1 mm belegt und in einem weiteren Kalander mit diesem verpreßt. Aus der resultierenden Bodenbelagsbahn werden nach dem Reifen im Reifehaus und dem nach dem Abkühlen eventuell notwendigen Konditionieren Bodenbelags-Fliesen mit einer Gesamtdicke von 2 mm und einer Größe von 30·30 cm und 50·50 cm gestanzt. Die Fliesen weisen zwei Nutzschichten von jeweils 1 mm Dicke und einen dazwischen angeordneten Träger auf. Die Fliesen werden 48 Stunden im Normklima gelagert. Die visuelle Beurteilung ergab, daß keine der Fliesen die bei herkömmlichen Linoleum-Bodenbelags-Fliesen beobachtete Schüsselung aufwies.

### Beispiel 2

Beispiel 1 wurde wiederholt mit dem Unterschied, daß die Nutzschichten jeweils 2 mm stark waren, wodurch sich Fliesen mit 4 mm Gesamtdicke ergaben. Die Fliesen zeigten keine Verformung nach Lagerung im Normklima für 48 Stunden.

### Beispiel 3

Die Beispiele 1 und 2 wurden wiederholt, mit dem Unterschied, daß anstelle des Jutegewebes als Träger ein Glasfasergewebe verwendet wurde, das mit einem Styrol-Butadien-Latex als Haftvermittler beschichtet war.

Keine der erhaltenen Fliesen zeigte eine Verformung nach Lagerung im Normklima für 48 Stunden.

### Vergleichsbeispiel 1

In der selben, wie in Beispiel 1 beschriebenen Weise, wird eine Bodenbelags-Fliese hergestellt, jedoch wird nur, wie in herkömmlicher Weise, eine Seite des Jutegewebes mit einer 1 mm dicken Schicht aus Mischmasse beschichtet. Die daraus resultierende Bodenbelags-Fliese mit einer Gesamtdicke von 1 mm zeigte eine deutliche Schüsselung nach Lagerung im Normklima für 48 Stunden.

### Vergleichsbeispiel 2

Vergleichsbeispiel 1 wurde wiederholt, wobei die auf nur eine Seite des Trägers aufgebrachte Nutzschicht eine Dicke von 2 mm aufwies. Die daraus resultierende Bodenbelags-Fliese zeigte eine noch stärkere Schüsselung nach Lagerung im Normklima für 48 Stunden, als die Fliese des Vergleichsbeispiels 1.

### Vergleichsbeispiel 3

Vergleichsbeispiel 2 wurde wiederholt, mit dem Unterschied, daß anstelle des Jutegewebes das Glasfasergewebe gemäß Beispiel 3 verwendet wurde. Die resultierenden Bodenbelags-Fliesen zeigten ebenfalls eine deutliche Schüsselung nach Lagerung im Normklima für 48 Stunden.

## Patentansprüche

1. Flexible Bodenbelags-Fliese, umfassend mindestens eine obere und mindestens eine untere Nutzschicht und einen zwischen den Nutzschichten angeordneten Träger, wobei die mindestens eine obere und die mindestens eine untere Nutzschicht Linoleum-Nutzschichten sind und wobei zwischen dem Träger und den Nutzschichten mindestens eine weitere Schicht eingebracht ist, und
wobei die weitere Schicht bzw. weiteren Schichten eine Wärmeisolationsschicht und/oder eine Schicht zur Trittschalldämmung ist bzw. sind.

2. Bodenbelags-Fliese nach Anspruch 1, wobei die auf die jeweilige Seite des Trägers aufgebrachten Linoleumnutzschichten unterschiedliche Schichtdicken aufweisen.

3. Bodenbelags-Fliese nach Anspruch 1, wobei die auf die jeweilige Seite des Trägers aufgebrachten Linoleumnutzschichten im wesentlichen die selbe Schichtdicke aufweisen.

4. Bodenbelags-Fliese nach einem der vorhergehenden Ansprüche, wobei die Nutzschichten gleich oder verschieden gefärbt sind.

5. Bodenbelags-Fliese nach einem der vorhergehenden Ansprüche, wobei die Nutzschichten ein gleiches oder verschiedenes Farbmuster aufweisen.

6. Verfahren zur Herstellung einer flexiblen Bodenbelags-Fliese mit mindestens einer oberen und mindestens einer unteren Linoleum-Nutzschicht und einem zwischen den Nutzschichten angeordneten Träger, umfassend die Schritte:
Bereitstellen eines Trägers in Bahnenform; Aufbringen von mindestens einer Wärmeisolations- und/oder Tristtschalldämmungs- Schicht auf mindestens eine Seite des Trägers; Beschichten der einen Seite des Trägers mit mindestens einer oberen Nutzschicht aus einer Linoleum-Mischmasse;
anschließendes Beschichten der anderen Seite des Trägers mit mindestens einer unteren Nutzschicht aus einer Linoleum-Mischmasse, um eine Bahn des Bodenbelags zu erhalten;
Transportieren der Bodenbelagsbahn in eine Reifekammer zur Reifung der Bahn;
gegebenenfalls Konditionieren der abgekühlten Bahn zur Einstellung der Feuchtigkeit; und
Ausstanzen der Fliese aus der Bodenbelagsbahn.

7. Verfahren nach Anspruch 6, wobei der Träger ein Jutegewebe ist.

8. Verfahren nach Anspruch 6, wobei der Träger ein Glasfasergewebe ist, dessen Fasern mit einem Haftvermittler beschichtet sind.

9. Verfahren nach einem der Ansprüche 6 bis 8, wobei die auf den Träger aufgebrachten Linoleumnutzschichten eine unterschiedliche Dicke aufweisen.

10. Verfahren nach einem der Ansprüche 6 bis 8, wobei die Linoleumnutzschichten im wesentlichen die selbe Dicke aufweisen.

11. Verfahren nach Anspruch 10, wobei die Nutzschichten aus einer Mischmasse mit einer im wesentlichen gleichen Zusammensetzung gebildet sind.

12. Verfahren nach einem der Ansprüche 6 bis 11, wobei die Nutzschichten gleich oder verschieden gefärbt sind.

13. Verfahren nach einem der Ansprüche 6 bis 12, wobei die Nutzschichten ein gleiches oder verschiedenes Farbmuster aufweisen.

## Claims

1. Flexible floorcovering tile comprising at least one upper and at least one lower service layer and a carrier arranged between the service layers, where the at least one upper and the at least one lower service layer are linoleum service layers and where at least one other layer has been introduced between the carrier and the service layers, and where the other layer(s) is/are a thermally insulating layer and/or a layer for sound-deadening with respect to solid-borne sound.

2. Floorcovering tile according to Claim 1, where the linoleum service layers applied to each side of the carrier have different thicknesses.

3. Floorcovering tile according to Claim 1, where the linoleum service layers applied to each side of the carrier have substantially the same thickness.

4. Floorcovering tile according to any of the preceding claims, where the service layers have been identically or differently coloured.

5. Floorcovering tile according to any of the preceding claims, where the service layers have an identical or different coloured pattern.

6. Process for producing a flexible floorcovering tile with at least one upper and at least one lower linoleum service layer and a carrier arranged between the service layers, comprising the steps of:
providing a carrier in web form; applying at least one thermally insulating and/or solid-borne-sound-deadening layer to at least one side of the carrier; coating one side of the carrier with at least one upper service layer made from a linoleum mix;
then coating the other side of the carrier with at least one lower service layer made from a linoleum mix, to obtain a floorcovering web;
transporting the floorcovering web into a curing room for curing the web;
where appropriate, conditioning the cooled web to adjust the moisture level; and
stamping out the tile from the floorcovering web.

7. Process according to Claim 6, where the carrier is a jute fabric.

8. Process according to Claim 6, where the carrier is a glass-fibre fabric, the fibres of which have been coated with a coupling agent.

9. Process according to any of Claims 6 to 8, where the linoleum service layers applied to the carrier have a different thickness.

10. Process according to any of Claims 6 to 8, where the linoleum service layers have substantially the same thickness.

11. Process according to Claim 10, where the service layers have been formed from a mix with a substantially identical composition.

12. Process according to any of Claims 6 to 11, where the service layers have been identically or differently coloured.

13. Process according to any of Claims 6 to 12, where the service layers have an identical or different coloured pattern.

## Revendications

1. Dalle flexible de revêtement de sol, comportant au moins une couche d'usure supérieure et au moins une couche d'usure inférieure, et un support disposé entre les couches d'usure, la au moins une couche d'usure supérieure et la au moins une couche d'usure inférieure étant des couches d'usure en linoléum, au moins une autre couche étant déposée entre le support et les couches d'usure, et l'autre couche ou les autres couches formant une couche d'isolation thermique et/ou couche d'amortissement de bruits d'impact.

2. Dalle de revêtement de sol selon la revendication 1, dans laquelle les couches d'usure en linoléum appliquées sur chaque face du support présentent des épaisseurs de couche différentes.

3. Dalle de revêtement de sol selon la revendication 1, dans laquelle les couches d'usure en linoléum appliquées sur chaque face du support ont sensiblement la même épaisseur de couche.

4. Dalle de revêtement de sol selon l'une quelconque des revendications précédentes, dans laquelle les couches d'usure sont de la même couleur ou de couleurs différentes.

5. Dalle de revêtement de sol selon l'une quelconque des revendications précédentes, dans laquelle les couches d'usure comportent un motif de couleur identique ou différent.

6. Procédé destiné à la fabrication d'une dalle flexible de revêtement de sol, comportant au moins une couche d'usure supérieure et au moins une couche d'usure inférieure en linoléum, et un support disposé entre les couches d'usure, englobant les phases :
de mise à disposition d'un support en forme de bande ; d'application d'au moins une couche d'isolation thermique et/ou une couche d'amortissement du bruit d'impact sur l'une au moins des faces du support ; d'application sur l'une des faces du support d'au moins une couche d'usure supérieure constituée d'une masse de mélange de linoléum ;
d'application consécutive sur l'autre face du support d'au moins une couche d'usure inférieure constituée d'une masse de mélange de linoléum afin d'obtenir une bande de revêtement de sol ;
de transport de la bande de revêtement de sol dans une chambre de maturation pour la maturation de la bande ; et
le cas échéant, de conditionnement de la bande refroidie, pour la mise au point de l'humidité ; et
de découpe de la dalle à partir de la bande de revêtement de sol.

7. Procédé selon la revendication 6, dans lequel le support est une toile de jute.

8. Procédé selon la revendication 6, dans lequel le support est un tissu en fibres de verre dont les fibres sont enduites d'un agent d'adhérence.

9. Procédé selon l'une quelconque des revendications 6 à 8, dans lequel les couches d'usure en linoléum appliquées sur le support ont différentes épaisseurs.

10. Procédé selon l'une quelconque des revendications 6 à 8, dans lequel les couches d'usure en linoléum appliquées sur le support ont la même épaisseur.

11. Procédé selon la revendication 10, dans lequel les couches d'usure sont constituées d'une masse de mélange d'une composition sensiblement identique.

12. Procédé selon l'une quelconque des revendications 6 à 11, dans lequel les couches d'usure sont de même couleur ou de couleurs différentes.

13. Procédé selon l'une quelconque des revendications 6 à 12, dans lequel les couches d'usure comportent un motif de couleur identique ou différent.
